# EUROPÄISCHE PATENTSCHRIFT

(11) **EP 2 029 401 B1**
(45) Veröffentlichungstag und Bekanntmachung des Hinweises auf die Patenterteilung: **13.02.2013**
(21) Anmeldenummer: 07729317.3
(22) Anmeldetag: 21.05.2007
(51) Int. Cl.: B60R 22/46

(54) **GURTSTRAFFERANTRIEB**
BELT-TENSIONING DRIVE
MECANISME TENDEUR DE CEINTURE

(30) Priorität: 08.06.2006 DE 102006026734
(43) Veröffentlichungstag der Anmeldung: 04.03.2009
(73) Patentinhaber: Brose Fahrzeugteile GmbH & Co. KG, Würzburg, 97076 Würzburg (DE)
(72) Erfinder: VIERNEKES, Gerald, 97437 Hassfurt (DE)
(74) Vertreter: Isarpatent
(86) Internationale Anmeldenummer: PCT/EP2007/054873
(87) Internationale Veröffentlichungsnummer: WO 2007/141129

(56) Entgegenhaltungen:
- EP-A1- 1 264 735
- WO-A-03/099619
- WO-A-2005/039942
- DE-A1- 10 322 084
- DE-A1- 10 352 026
- DE-T2- 69 822 701

## Beschreibung

Die Erfindung betrifft einen Gurtstrafferantrieb für den Sicherheitsgurt eines Fahrzeugs.

Bereits bekannte Gurtstrafferantriebe weisen einen Elektromotor, eine Getriebewelle und ein Abtriebsrad auf, wobei das Abtriebsrad mit der Wickelwelle des Sicherheitsgurtes gekuppelt ist. Der Elektromotor treibt die Getriebewelle über ein erstes Getriebe an, bei welchem es sich um ein Kronenradgetriebe handelt. Die Getriebewelle treibt über ein zweites Getriebe, bei welchem es sich um ein Schneckengetriebe handelt, das Abtriebsrad an, welches mit der Wickelwelle des Sicherheitsgurtes gekuppelt ist.

Ein solcher Gurtstrafferantrieb mit einer Vorstraffeinrichtung ist auch aus der WO 03/099619 A2 bekannt. Bei dieser Vorrichtung ist die Gurtwelle mit einem Elektromotor als Strafferantrieb über ein zwischengeschaltetes Getriebe kuppelbar. Als Getriebe zum Anschluss der Gurtwelle an den Elektromotor ist eine mit einer Außenverzahnung der Gurtwelle kämmende Schneckenverzahnung vorgesehen. Diese stützt sich über ein ortsfestes Widerlager derart ab, dass bei einer gegen das Widerlager gerichteten axialen Belastung der Schneckenverzahnung durch eine an der Gurtwelle in Gurtauszugsrichtung angreifende Last mit einer Abstützkraft eine Hemmung der Schneckendrehung zur Aufnahme des von der Schneckenwelle ausgeübten Drehmoments herbeigeführt ist. Die die Schneckenverzahnung tragende Trägerwelle ist über ein Kronenradgetriebe an den Elektromotor gekoppelt.

Ein Nachteil der vorstehend beschriebenen Gurtstrafferantriebe besteht darin, dass durch das Kronenradgetriebe ein harter Verzahnungseingriff gegeben ist. Dies hat eine Geräuschentwicklung sowie Vibrationen zur Folge, welche für erweiterte Komfortfunktionen eines Gurtstraffers nicht mehr akzeptabel sind.

Aus der DE 102 59 635 A1 ist ein Gurtschloss mit einer präventiven Straffeinrichtung bekannt, die das Gurtschloss von einer Betriebsstellung in eine demgegenüber abgesenkte Sicherheitsstellung bewegt. Die bekannte Straffeinrichtung weist einen Kraftspeicher und eine Antriebseinheit auf.
In der Betriebsstellung wird das Gurtschloss durch den Kraftspeicher unter Vorspannung gehalten. Die Antriebseinheit führt das Gurtschloss von der Sicherheitsstellung in die Betriebsstellung zurück. Bei der Antriebseinheit kann es sich um einen Elektromotor handeln, der eine elektromotorische Sitzverstellung antreibt. Die Antriebswelle weist ein Übersetzungsgetriebe auf, zu welchem eine Schnecke und ein Schneckenrad gehören. Das Schneckenrad ist auf einer Welle angeordnet, die des Weiteren ein Sperrrad aufweist. Das Sperrrad wirkt mit einer Zahnstange zusammen, an welcher das Gurtschloss befestigt ist.

Die DE 103 22 084 A1 beschreibt eine Aufwickelvorrichtung eines Rückhaltesystems. Die Aufwickelvorrichtung weist ein in einem Gehäuse angeordnetes Antriebsmittel in Form eines elektromotorisch betriebenen Straffers auf, der seinerseits eine von einem Elektromotor antreibbare Spindelwelle umfasst.

Die Aufgabe der Erfindung besteht darin, einen platzsparend aufgebauten Gurtstrafferantrieb anzugeben, bei welchem die Geräuschentwicklung und die Vibrationen reduziert sind.

Diese Aufgabe wird durch einen Gurtstrafferantrieb mit den im Anspruch 1 angegebenen Merkmalen gelöst.

Vorteilhafte Ausgestaltungen und Weiterbildungen der Erfindung sind in den abhängigen Ansprüchen angegeben.

Die Vorteile der Erfindung bestehen insbesondere darin, dass ein Gurtstrafferantrieb mit den im Anspruch 1 angegebenen Merkmalen geräuscharm und vibrationsarm arbeitet. Weiterhin ist die Anzahl der Bauteile eines Gurtstrafferantriebs gemäß der Erfindung reduziert. Diese Vorteile werden im Wesentlichen dadurch erreicht, dass durch den wälzenden Eingriff der Verzahnung des Schneckengetriebes die Geräuschentwicklung niedrig bleibt und Vibrationen verhindert werden.

Weiterhin kann ein Gurtstrafferantrieb gemäß der Erfindung bauraumsparend aufgebaut werden. Zu diesem Zweck werden die beiden Schneckengetriebe des Gurtstrafferantriebs jeweils in Form eines 90°-Umlenkgetriebes realisiert, so dass die Rotorwelle des Elektromotors und die Axialrichtung des Abtriebs-Schneckenrades, d. h. die Axialrichtung der Wickelwelle des Sicherheitsgurtes, parallel zueinander verlaufen. Dies ermöglicht es, den Elektromotor des Gurtstrafferantriebs in der B-Säule eines Kraftfahrzeugs oberhalb des Gurtaufrollers liegend zu realisieren.

Weitere vorteilhafte Eigenschaften der Erfindung ergeben sich aus der deren beispielhafter Erläuterung anhand der Figuren.

Es zeigt
- Figur 1: eine perspektivische Darstellung der wesentlichen Bauteile eines Gurtstrafferantriebs gemäß der Erfindung,
- Figur 2: eine perspektivische Darstellung der in ein Getriebegehäuse eingesetzten wesentlichen Bauteile eines Gurtstrafferantriebs gemäß der Erfindung und
- Figur 3: eine Darstellung zur Veranschaulichung des Einbaus eines Gurtstrafferantriebs gemäß der Erfindung in die B-Säule eines Kraftfahrzeugs.

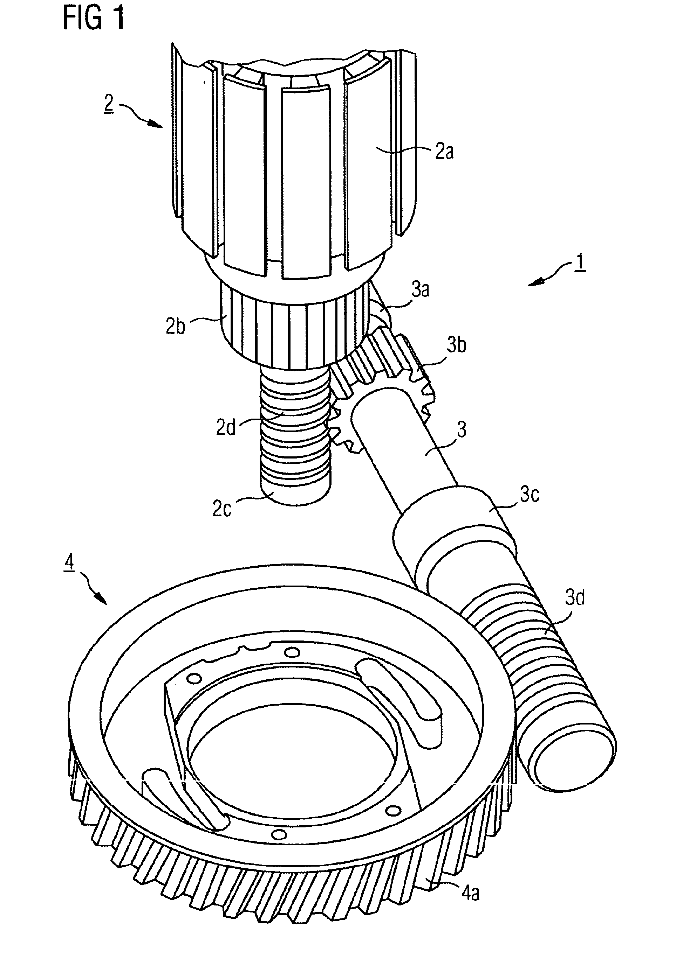

Die Figur 1 zeigt eine perspektivische Darstellung der zum Verständnis der Erfindung wesentlichen Bauteile eines Gurtstrafferantriebs gemäß der Erfindung. Der dargestellte Gurtstrafferantrieb 1 weist einen Elektromotor 2 auf, von welchem in der Figur 1 das Rotorpaket 2a, ein Kommutator 2b, eine Rotorwelle 2c und eine in die Rotorwelle eingebrachte Schnecke 2d gezeigt sind. Das Rotorpaket 2a und der Kommutator 2b sind mit der Rotorwelle 2c drehfest verbunden. Weiterhin weist der Gurtstrafferantrieb 1 eine Getriebewelle 3 auf. Diese ist mit einem drehfest mit ihr verbundenen Schneckenrad 3b versehen. Weiterhin weist die Getriebewelle 3 eine in sie eingebrachte weitere Schnecke 3d auf. Zur Lagerung der Getriebewelle in einem nicht dargestellten Gehäuse sind ein erstes Lager 3a und ein zweites Lager 3c vorgesehen, bei denen es sich um Kalottenlager handelt. Ferner weist der Gurtstrafferantrieb 1 ein Abtriebsrad 4 auf, bei welchem es sich um ein Schneckenrad handelt. Dieses ist an seinem Außenumfang mit einer Außenverzahnung 4a versehen. In die Innenausnehmung des Abtriebsrades 4 ist die in der Figur 1 nicht gezeigte Wickelwelle eines Sicherheitsgurtes eines Kraftfahrzeugs eingesetzt.

Der Elektromotor 2 treibt über ein erstes Getriebe die Getriebewelle 3 an. Das erste Getriebe wird von der Schnecke 2d der Rotorwelle und dem mit der Getriebewelle drehfest verbundenen Schneckenrad 3b gebildet, wobei das Schneckenrad 3b mit der Schnecke 2d kämmt. Bei diesem ersten Getriebe handelt es sich um ein Schneckengetriebe, welches im Sinne eines 90°-Umlenkgetriebes realisiert ist. Die Rotorwelle 2c des Elektromotors 2 und die Getriebewelle 3 sind im rechten Winkel zueinander angeordnet.

Die Getriebewelle 3 treibt über ein zweites Getriebe das Abtriebsrad 4 an. Dieses zweite Getriebe wird von der Schnecke 3d der Getriebewelle und dem mit der Wickelwelle gekuppelten Abtriebsrad 4 mit der Außenverzahnung 4a gebildet, wobei die Schnecke 3d, die vorzugsweise in Kunststoff ausgeführt ist, mit dem Abtriebsrad 4 kämmt. Auch bei diesem zweiten Getriebe handelt es sich um ein Schneckengetriebe, welches im Sinne eines 90°-Umlenkgetriebes realisiert ist. Die Getriebewelle 3 und die mit dem Abtriebsrad 4 gekuppelte Wickelwelle des Sicherheitsgurtes sind im rechten Winkel zueinander angeordnet. Alternativ dazu kann es sich beim zweiten Getriebe auch um ein Stirnradgetriebe handeln.

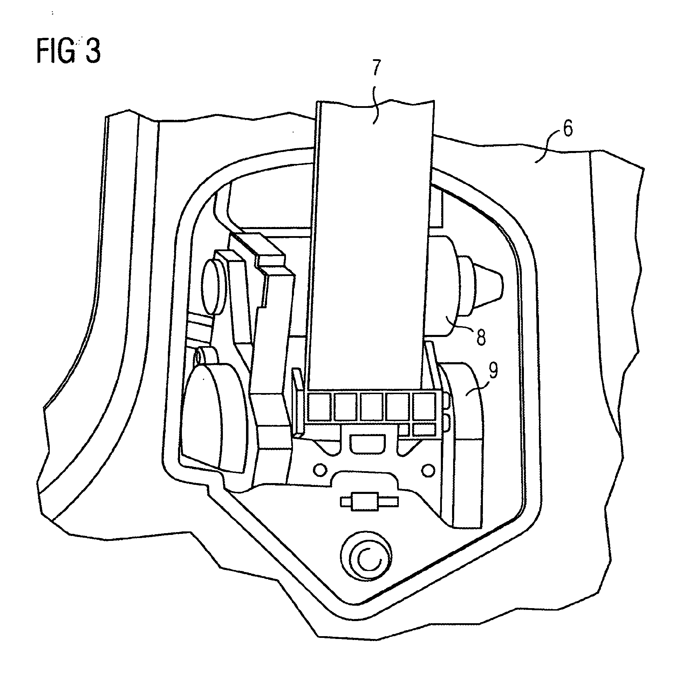

Durch die Verwendung zweier 90°-Umlenkgetriebe wird in vorteilhafter Weise erreicht, dass die Rotorwelle 2c und die in der Figur 1 nicht dargestellte Wickelwelle parallel zueinander verlaufen. Dies begünstigt einen bauraumsparenden Aufbau des Gurtstrafferantriebs, wie es noch unten anhand der Figur 3 erläutert wird.

Durch die Verwendung eines Schneckengetriebes als erstes Getriebe wird in vorteilhafter Weise erreicht, dass im Betrieb ein wälzender Eingriff der Verzahnung des Schneckenrades 3b in die Schnecke 2d erfolgt. Dadurch arbeitet der Antrieb geräusch- und vibrationsarm. Ferner kann in vorteilhafter Weise auf die Verwendung einer aus Stahl bestehenden Getriebewelle verzichtet werden, da wegen des wälzenden Eingriffs der Verzahnung des Schneckengetriebes in die Schnecke die auf die Getriebewelle einwirkenden Belastungen reduziert sind.

Weiterhin wird mittels der vorliegenden Erfindung die Funktionalität eines Gurtstrafferantriebs verbessert. Diese Funktionalität eines Gurtstrafferantriebs verlangt, dass der Vorverlagerungskraft, die dadurch entsteht, dass ein Fahrzeuginsasse beim Bremsen des Fahrzeugs starken Gurt auf das Gurtband ausübt, entgegengewirkt wird. Dieses Ausüben eines starken Druckes auf das Gurtband entspricht dem Versuch, das Getriebe in Rückwärtsrichtung zu drehen.

Bei dem vom Anmelder entwickelten, eingangs genannten Gurtstrafferantrieb wird durch eine entsprechende Auslegung des Schrägungswinkels des zweiten Schneckengetriebes erreicht, dass dieses in Rückwärtsrichtung bzw. getriebener Richtung einen schlechteren Wirkungsgrad hat als in Vorwärtsrichtung bzw. treibender Richtung. Bezüglich des ersten Getriebes, bei welchem es sich bei dem vom Anmelder entwickelten bekannten Gurtstrafferantrieb um ein Kronenradgetriebe handelt, stimmt der Wirkungsgrad in Rückwärtsrichtung mit dem Wirkungsgrad in Vorwärtsrichtung überein. Um der genannten Vorverlagerungskraft besser entgegenzuwirken als nur durch die genannte Auslegung des Schrägungswinkels des zweiten Schneckengetriebes wird beim bekannten Gurtstrafferantrieb der Elektromotor mit einer Stromstärke von ca. einem Drittel des maximalen Blockstromes gegenbestromt.

Eine Gegenbestromung mit einer solchen Stromstärke ist bei einem Gurtstrafferantrieb gemäß der Erfindung nicht zwingend notwendig. Denn bei einem Gurtstrafferantrieb gemäß der Erfindung wird der Selbsthemmungseffekt des Getriebes dadurch verstärkt, dass es sich auch beim ersten Getriebe um ein Schneckengetriebe handelt. Durch das Hintereinanderschalten von zwei Schneckengetrieben erhält man in vorteilhafter Weise in Vorwärtsrichtung bzw. treibender Richtung einen ausreichenden Wirkungsgrad und in Rückwärtsrichtung bzw. getriebener Richtung die erwünschte Selbsthemmung bzw. Schwergängigkeit. Bei Bedarf kann der Selbsthemmungseffekt noch durch eine Gegenbestromung des Motors mit einer geringen Stromstärke unterstützt werden.

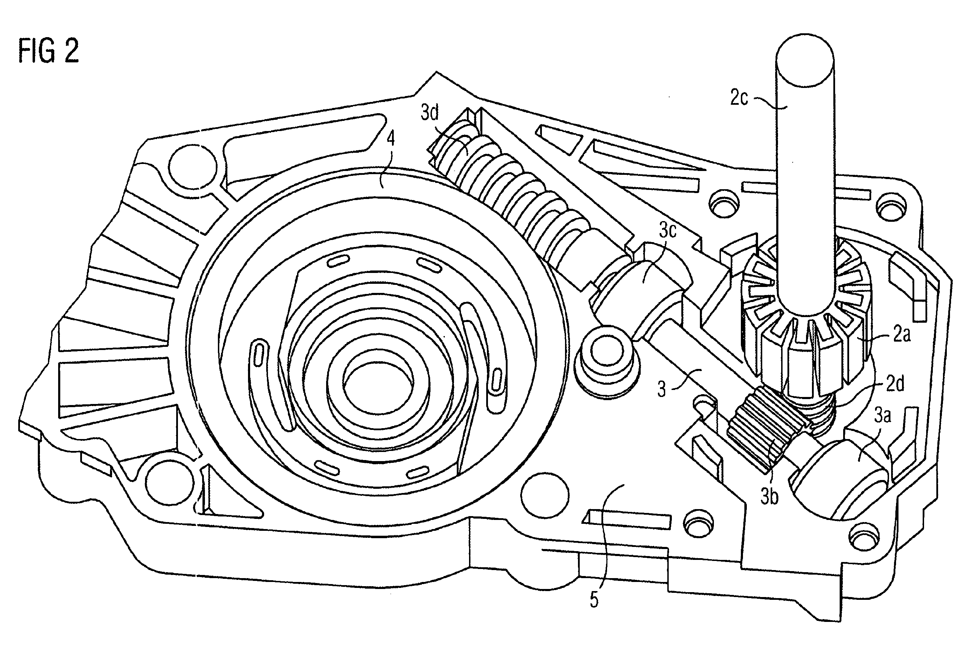

Die Figur 2 zeigt eine perspektivische Darstellung der in ein Getriebegehäuse eingesetzten, für das Verständnis der Erfindung wesentlichen Bauteile eines Gurtstrafferantriebs gemäß der Erfindung. Insbesondere ist aus der Figur 2 ersichtlich, dass die Rotorwelle 2c des Elektromotors aus der vom Getriebegehäuse 5 gebildeten Ebene senkrecht nach oben heraussteht, dass die Getriebewelle 3 in der vom Getriebegehäuse 5 gebildeten Ebene liegt und dass die auch in der Figur 2 nicht gezeichnete Wickelwelle des Sicherheitsgurtes, die drehfest mit dem Abtriebsrad 4 verbunden ist und axial in die in der Mitte des Abtriebsrades 4 vorgesehene Aussparung eingesetzt ist, ebenfalls im rechten Winkel zu der vom Getriebegehäuse 5 gebildeten Ebene angeordnet ist. Weiterhin geht aus der Figur 2 hervor, dass die in das Abtriebsrad 4 eingesetzte Wickelwelle des Sicherheitsgurtes parallel zur Rotorwelle 2c des Elektromotors verläuft, so dass insgesamt ein bauraumsparender Aufbau des Gurtstrafferantriebs gegeben ist.

Dieser bauraumsparende Aufbau eines Gurtstrafferantriebs gemäß der Erfindung ermöglicht einen platzsparenden Einbau des Gurtstrafferantriebs in die B-Säule eines Kraftfahrzeugs. Dies ist in der Figur 3 veranschaulicht. Dort sind mit der Bezugsziffer 6 die B-Säule, mit der Bezugsziffer 7 der Sicherheitsgurt, mit der Bezugsziffer 8 das Gehäuse des Elektromotors und mit der Bezugsziffer 9 das Gehäuse des Gurtaufrollers bezeichnet. Aus der Figur 3 ist ersichtlich, dass der Elektromotor des Gurtstrafferantriebs in platzsparender Weise liegend oberhalb des Gurtaufrollers angeordnet ist.

## Patentansprüche

1. Gurtstrafferantrieb, welcher einen Elektromotor (2), eine Getriebewelle (3) und ein Abtriebselement (4) aufweist, wobei
- der Elektromotor (2) die Getriebewelle (3) über ein erstes Schneckengetriebe (2d, 3b) antreibt,
- die Getriebewelle (3) ihrerseits über ein zweites Getriebe (3d, 4a) das Abtriebselement (4) antreibt,
- das zweite Getriebe (3d, 4a) als ein Schneckengetriebe ausgebildet ist, wobei ein Schrägungswinkel des Schneckengetriebes derart ausgelegt ist, dass dieses in getriebener Richtung einen schlechteren Wirkungsgrad als in treibender Richtung aufweist,
- das erste und das zweite Getriebe als 90°-Umlenkgetriebe ausgebildet sind, und
- das Abtriebselement (4) als ein Abtriebsrad ausgebildet ist, dessen Axialrichtung parallel zur Welle (2c) des Elektromotors (2) verläuft.

2. Gurtstrafferantrieb nach Anspruch 1,
wobei der Elektromotor (2) eine Rotorwelle (2c) und eine an der Rotorwelle vorgesehene Antriebsschnecke (2d) aufweist, die Getriebewelle (3) ein mit ihr drehfest verbundenes Schneckenrad (3b) aufweist und die Antriebsschnecke (2d) und das mit der Getriebewelle (3) drehfest verbundene Schneckenrad (3b) das erste Getriebe bilden.

3. Gurtstrafferantrieb nach einem der vorhergehenden Ansprüche,
wobei die Getriebewelle (3) eine weitere Schnecke (3d) aufweist, das Abtriebsrad (4) mit einer Außenverzahnung (4a) versehen ist und die weitere Schnecke (3d) und das Abtriebsrad (4) das zweite Getriebe bilden.

4. Gurtstrafferantrieb nach einem der vorhergehenden Ansprüche,
wobei das erste und das zweite Getriebe derart ausgelegt sind, dass die Selbsthemmung des Antriebs in getriebener Richtung unterstützt wird.

5. Gurtstrafferantrieb nach Anspruch 3,
wobei die weitere Schnecke (3d) in Kunststoff ausgeführt ist.

## Claims

1. Belt-tensioning drive, which comprises an electric motor (2), a transmission shaft (3) and an output member (4), wherein
- the electric motor (2) drives the transmission shaft (3) via a first worm gear (2d, 3b),
- the transmission shaft (3), in turn, drives the output member (4) via a second transmission (3d, 4a),
- the second transmission (3d, 4a) is in the form of a worm gear, an angle of inclination of the worm gear being configured in such a way that said gear has a worse efficiency level in a driven direction than in a driving direction,
- the first and second transmissions are in the form of 90° angle gears, and
- the output member (4) is in the form of an output wheel, the axial direction of which extends parallel to the shaft (2c) of the electric motor (2).

2. Belt-tensioning drive according to claim 1, wherein the electric motor (2) comprises a rotor shaft (2c) and a drive screw (2d) which tis provided on the rotor shaft, the transmission shaft (3) comprises a worm wheel (3b) which is rotationally engaged therewith, and the drive screw (2d) and the worm wheel (3b) which is rotationally engaged with the transmission shaft (3) form the first transmission.

3. Belt-tensioning drive according to any one of the preceding claims, wherein the transmission shaft (3) comprises a further screw (3d), the output member (4) is provided with an external toothing (4a), and the further screw (3d) and the output member (4) form the second transmission.

4. Belt-tensioning drive according to any one of the preceding claims, wherein the first and second transmissions are configured in a manner which promotes self-locking of the drive in the driven direction.

5. Belt-tensioning drive according to claim 3, wherein the further screw (3d) is made of plastics material.

## Revendications

1. Mécanisme tendeur de ceinture, qui présente un moteur électrique (2), un arbre de transmission (3) et un élément de sortie (4),
- le moteur électrique (2) entraînant l'arbre de transmission (3) par l'intermédiaire d'un premier engrenage à vis sans fin (2d, 3b),
- l'arbre de transmission (3) entraînant de son côté l'élément de sortie (4) par l'intermédiaire d'un second engrenage (3d, 4a),
- le second engrenage (3d, 4a) ayant la forme d'un engrenage à vis sans fin, un angle d'inclinaison de l'engrenage à vis sans fin étant conçu de telle sorte que celui-ci présente dans la direction entraînée un rendement plus mauvais que dans la direction d'entraînement,
- le premier et le second engrenage étant formés comme un mécanisme de renvoi à 90°, et
- l'élément de sortie (4) étant formé comme une roue de sortie, dont la direction axiale s'étend parallèlement à l'arbre (2c) du moteur électrique (2).

2. Mécanisme tendeur de ceinture selon la revendication 1, le moteur électrique (2) présentant un arbre de rotor (2c) et une vis sans fin d'entraînement (2d) prévue sur l'arbre de rotor, l'arbre de transmission (3) présentant une roue à vis sans fin (3b) solidaire en rotation avec celui-ci et la vis sans fin d'entraînement (2d) et la roue à vis sans fin (3b) solidaires en rotation avec l'arbre de transmission (3) formant le premier engrenage.

3. Mécanisme tendeur de ceinture selon l'une des revendications précédentes, l'arbre de transmission (3) présentant une vis sans fin supplémentaire (3d), la roue de sortie (4) étant pourvue d'une denture extérieure (4a) et l'autre vis sans fin (3d) et la roue de sortie (4) formant le second engrenage.

4. Mécanisme tendeur de ceinture selon l'une des revendications précédentes, le premier et le second engrenage étant conçus de telle sorte que l'auto-blocage de l'entraînement est supporté dans la direction entraînée.

5. Mécanisme tendeur de ceinture selon la revendication 3, la vis sans fin supplémentaire (3d) étant réalisée en matière plastique.
